# EUROPEAN PATENT APPLICATION

(11) **EP 1 338 465 A2**
(43) Date of publication of application: **27.08.2003**
(21) Application number: 02079266.9
(22) Date of filing: 15.10.2002
(51) Int. Cl.: B60N 2/58

(54) **Positioning and fixing element for vehicle seat covers**

(30) Priority: 16.10.2001 IT PN20010072
(71) Applicant: Leonardo S.n.c., 33095 S. Giorgio Della Richinvelda (PN) (IT)
(72) Inventor: Floriduz, Giancarlo, c/o Leonardo S.n.c., 33095 San Giorgio Della Richinvelda (PN) (IT)
(74) Representative: Da Riva, Ermanno

(57) **Abstract**

In the seat cover used to cover a vehicle's seat (1) it is putted, in the part which in the application will result positioned on uppon line (SU) of relative back (S), almost a crop of metal strap made of manually capable of being deformed material in order to make an only one element (11 or 22) developing longitudinally along this line near its uppon bord (SU) or along adjoining uppon end of back (S), or a couple of transversal elements made of flasks (44)placed symmetrically out of danger of this line (SU) moreover towards their side ends and which can rusult indipendent or interconnect by a longitudinal line (331) like single lines (11 or 22). Line or lines of metal strap in this way putted down, make relative fixing elements single multiple (11 or 22) multiple (44) or composite (331 or 332) which manually modelled by user, permit him regulary and uniformly to stick the covering seat cover at the relative seat (1).

## Description

Present invention has as object an element of positioning and fixing of so-called "seat covers" usually used for cover single-seater seats, in special way of vehicles.

This element results applicable to suitable fabrics used for covering of said seats in order to fix, position and support to them in steady and safety way, avoiding sliding and/or slipping on their surface. The above-mentioned element of fixing of "seat covers" results fundamentally formed by a strip made of suitable easy capable of being deformed material which be applied by inserting it in an interspace made of fabric fixed inside of the same which formed real covering so that user, manually operating, can appropriately mould with object of shape in which theserare realized.

To all persons are well-known various types of seats for various kind of vehicles so that so called "seat covers" for seats which user applies on them with object of shelter by wear caused by rubbing between fabrics which formed them and the same of sides of same user which comes into contact with them; moreover are necessary to prevent eventual accidental filths and/or tears caused by different uses each other there are provided for only normal sitting of driver and/or passenger.

"Seat covers" for seats which are usually in sale, are realized of various types of materials which can be elasticised or not, moreover clearly are treated and realized on norm so that to respect all safety and prevention regulations of accidental acts.

These "seat covers" are usually getting of only one piece which goes to cover both sitting and back of seat enveloping it in complete way in order to realize a covering which visually is without continuity solution. All these solutions are certainly applicable to seats on any car, but don't result particurlary suitable or answering to particular cases, as for example, case in which the seat is provided of side air-bag. In this case the explosive material which breeds gas that makes spreading out air-bag, could not have sufficient and necessary power to pull up back's fibers or seams of applied "seat cover" and so, in this case, doesn't permit operation of a safety gear which serves to save vehicle's occupant life, limiting at least, damages which could be caused of them in case of accident. For this reason car companies don't advise, in case of side air-bags on seats, use of "seat covers" for covering of seats in order to avoid of running into risks of missing outbreak of air-bag. For this reason there were be realized some seat covers with side openings which are closed in way and with well-known means, like velcre strips, buttons, etc. All these solutions as a fact that are valid according to sight point of opening in case of air-bag's driving, result moreover uncomfortable both in the application and in use, in fact, for example, can move and so open with consequent unwanted "seat covers" movements. Moreover all other types of well-known "seat covers" usually on the market and don't forecast for uses on seats with side air-bag are realized with elasticized fabric, for this, only one model could be fitted on only some types of seats; while that realized with no elasticized fabrics could not be fitted on different seats, so that must absolutely be realized on specific form of specific seat which will be cover, so, there must be product diversified conformations for various models.

Purpose of the present invention is to getting out of above-mentioned inconvenients and this is reached by application, under the "seat covers" fabric, of a fixing element conformed and moulded according with needs of the case which going to stick, following of its manual modelling on forms and dimensions of seat, causes together with other fixing means usually used, removable fixing of above-mentioned "seat cover" so that, eventual air-bag could extend itself in case of need, without risks of wrong opening due to fix side fabric.

Rather understand features and applicatory benefits of invention in object, let alone relative feasible and utilizable profits, all in a fulfilled favourite form and only at illustrative and not restrictive qualification, comes as following descript with reference to enclosed designs in which:
- pictures 1,2,3 and 4 show, with relative perspective sights, four different possible solutions of fixing element in object, applied to relative seat covers of covering of correspondent eventual single-seater seats of type normally arranged on car's front part and provided of sideways air-bag coming out of relative back.

It gets for clearness to notice, in above-mentioned pictures 1,2,3 and 4, the seats completed of relative covering seat covers, are indicated with discreetly thin line; while the different conformations of fixing and positioning elements of the same are indicated with more pronounced lines. Obviously common particulars will be indicated with some numerical references.

First of all the application of fixing element and of side opening element for eventual side air-bag are effected on common seat covers for seats appropriately realized to accomadate them, but however don't need of eventual and essential modifies respect towards traditional "seat covers" which are on sale.

First of all it is specified that used material for composition of fixing element of "seat cover" is preferably obtained from a thin mild aluminium sheet; clearly different means and materials could be used for this purpose, i.e. to plastically misshape itself in order to follow perfectly seat's conformation on which it is applied by maintaining a rather stiffness.

Object's "seat cover" is substantially made of a traditional part which realizes sitting and back and it is provided of all elastic fixing means of case and in its back rear, uppon and/or posterity upper of back is provided of fixing element obtained with above-mentioned material.

In particular, with reference picture 1, a first confirmation and applicatory disposition of fixing element in object are noticed. It is noticed that, as usually operate for seat covers plant, also in this case, on a seat 1 will be applicated a "seat cover" indicated, as said, whit thin line. This "seat cover" will stick seat 1 in permanent way resulting fixed in traditional way on it (1) by suitable outside E1 and cross E2 elastic ribbons of back S and sitting SD and through fixing element 11 will stick also in regular and uniform way, particularly at uppon part SU of back S; part in which the covering results difficult and almost always faulty. Fixing element 11 in this first solution is substantially made of a mild aluminium metal strap with rounded ends and outside bords suitably bevelled in order to avoid each possibility of cut or other inconvenients and as clearly noticed, will be applied on the relative "seat cover" so that to be positioned along line of uppon part SU of back S, as well as near relative back's bord.

Obviously this fixing element 11 will be insert and contained in a correspondent pocket obtained from sewing in interior part of seat cover a suitable piece of fabric in which, at the end, will result positioned. Ended covering of seat 1, this fixing element 11 comes in form of uppon part SU of seat folding its free ends so that they go to stick for a suitable vertical line along hips of back of said seat 1. In this way fixing element 11 will clamp in a vice on uppon back SU of back S of seat 1. Clearly than will proceed to thread the element which holds in tension the seat cover between back S and sitting SD of seat 1; so eventual elastics are hooked and in the end wills go on with introduction of ends of side mobile fabric's piece TML, obtaining so complete covering of seat S. Introduction of side mobile fabric's ends TML will happen putting it (TML) under correspondent parts of back's fabric of seat cover and fixing element 11 giving so visual effect of a "seat cover" completely without continuity solutions as the traditional current.

Side mobile fabric TML, in this case, will be sew for a suitable limited line A-B (indicated for clarity with more pronounced line) in order to fix and make an all with element of "seat cover" which makes the part which will cover back of seat. This thread along line A-B will be made on front part of side opening of back of "seat cover" and is made to give the possibility, if necessary, to the air-bag to extend and freely go out without find hindrances on it's way.

The only one "hindrance" will be defined by side mobile fabric TML which, instead of thwart the expansion of air-bag, it will favour this because, as indicated in line outline-point, will be only thread under "seat cover" F which will keep it under itself with strengh factor developed by the same fabric and also partly through interference of element 11 under it will be clamped. notice always for clearness that in all illustrative four pictures to which make reference, the whole strip of side mobile fabric TML will indicated in the opened position with pronounced hatched line, moreover all these pictures are completed by a "headrest" PT indicated in uppon part of back S with thinned hatched line.

Moreover notice that following carried out tests, seaming line A-B which links up this strip of side mobile fabric TML with correspondent part of side bord of covering seat cover of back S extends itself suitably only for half of total lenght of this trip of side mobile fabric TML. Following pictures 2,3 and 4, as clearly noticeable,always show the same seat 1 and the same common elements which, being yet explained in the description of solution of picture 1, are not repeated.

Only differences are practically in the different conformations giving from fixing element.

Before continuing with description of following solutions, incidentally notice that fixing element in object, in its various conformations which are explaind, is always made from a suitable crop of metal strap obtained, as mentioned, by a suitable material, for example mild aluminium or equivalent material, i.e. a material which can be easily disformed with an easy manual action, maintaining conformation which was imprinted.

From practic realizations, it was result ideal the use of an aluminium metal strap with thickness less superior about a millimetre and which has a breadth between a minimum of cm.3 and a maximum of about cm.4.

Looking for picture 2, notice that relative fixing element 22 is in all comformly equal of that (11) previously descript with reference to picture 1. It's different from previous solution only for point that, instead to be based on uppon line SU of back S, will stick at rear surface of this last resulting moreover always positioned of relative rear bord. In substance the new fixing element 22 results orthogonally arranged to that previous case.

Referring to picture 3, also in it notice that all is unchanged towards previous pictures.

Only one change regards always fixing element which in this is called again with reference 33. This fixing element 33 will be made from a main part, done from an element 331, practically equal of fixing element 11 of solution showned in picture 1 and which like this is applied on part of uppon line of back S of seat 1; moreover near free ends of this element 331 will be diverged, at a suitable distance, both the headrest and these two elements which can be defined for their form like a fixing "flasks" 332. These fixing "flasks" 332 will be connected at their end to element 331 or directly deduced together this (331), so that their free ends finishing on front back of back could be suitably bend again on the front back getting so a toothing and double relative fixing, i.e. the first, as showned in pictures 1 and 2, while the second through the fixing "flasks" 332. Obviously element 33 of picture 3 could be realized in such a way as to its element 331 instead to be like fixing element 11 of picture 1, could be arranged like fixing element 22 of picture 2, always together with fixing "flasks" 332.

Picture 4 points out, at the end, another solution of fixing getting through two fixing "flasks" 44. These two fixing "flasks" 44 will be superiorly positioned to back S of seat 1, sideways the headrest.

Operating by hand at the same, in such a way as to manual bend, they will go in toothing and fixing on to the same back S, getting so fixing and conformative adaption of relative part of "seat cover"on the correspondent interested part of seat 1; clearly provided that all pointed out features in other solutions.

The illustrative fixing solutions up to here described, were be described in order to realize a seat cover made of protective and/or ornamental fabric of seats such as an only one type of seat cover can be adapt to seats with also discreetly different forms and/or dimensions allowing so to get an optimum wearableness of these last avoiding the beauty defects which will come from faulty mutual conformation. Further on this essential benefit, the "seat covers" made as described, permit the application in easy and safety way of the same, also and above all, to seats with side air-bag, all this moreover with a considerable beauty result.

Clearly, this solution permits, not only from an aesthetic point of view, to obtain covering of seats perfectly moulded on the same, but permits to realize these coverings in absolute and total safety for using of side air-bag, so it is able to meet request of safety helpful and necessary for vehicles.

So in this case could not, as usually occur by car companies, be advised against plant on seats with side air-bag because opening of covering is sure and safety.

At this point notice that description carried out make reference to solution of seat covers provided for applications to seats with side air-bag; obviously,it is well-known that all part relative to this element will can be avoid by creating easier and cheaper seat covers, i.e. side closed.

It is well understand that different versions could be bring to fixing element which are object of this invention, to conformation of the same "seat cover" and of the elements made of vertical mobile fabric, as well as also to their course of whole and installation without moreover go out of limit of here describt and here following claimed with reference to enclosed designs and so by protection rule of present industrial patent-right.

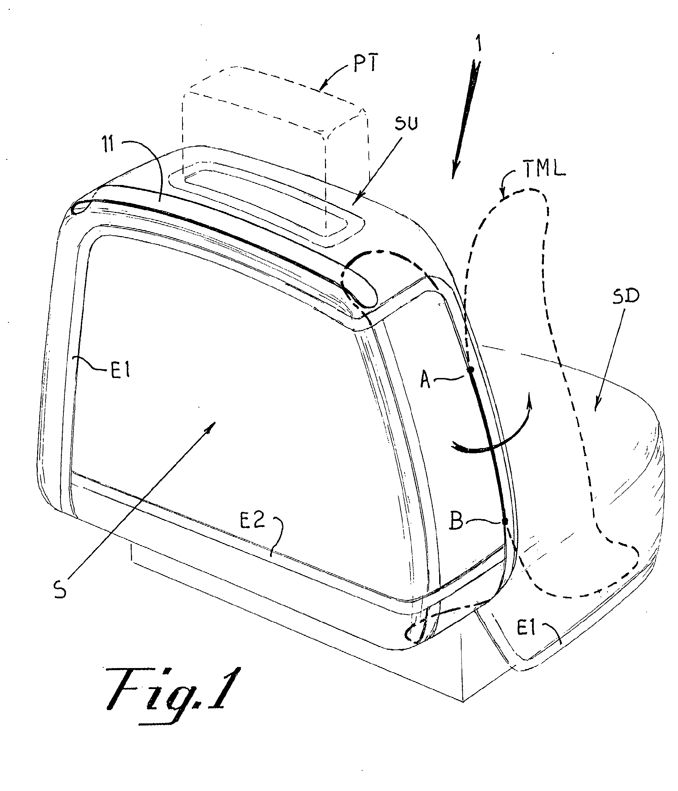

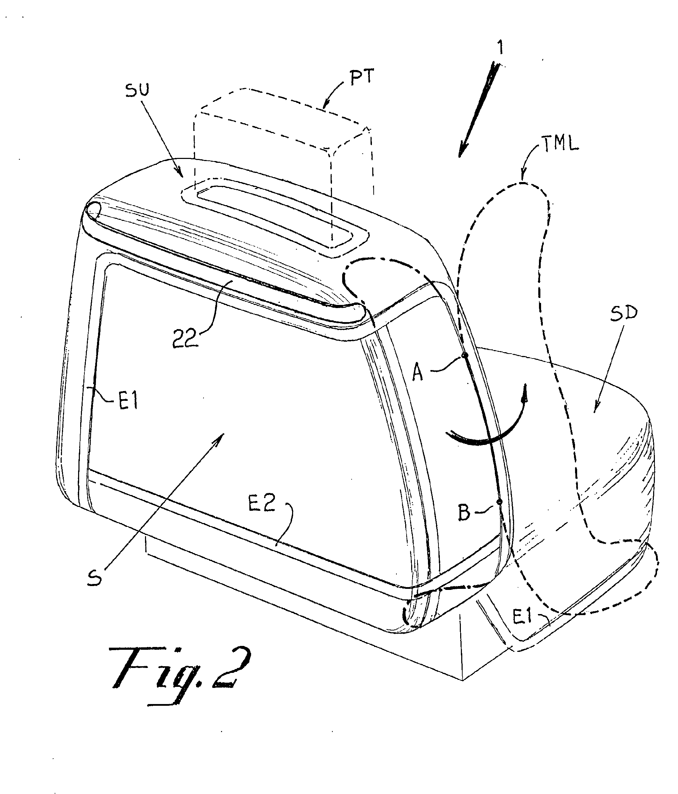

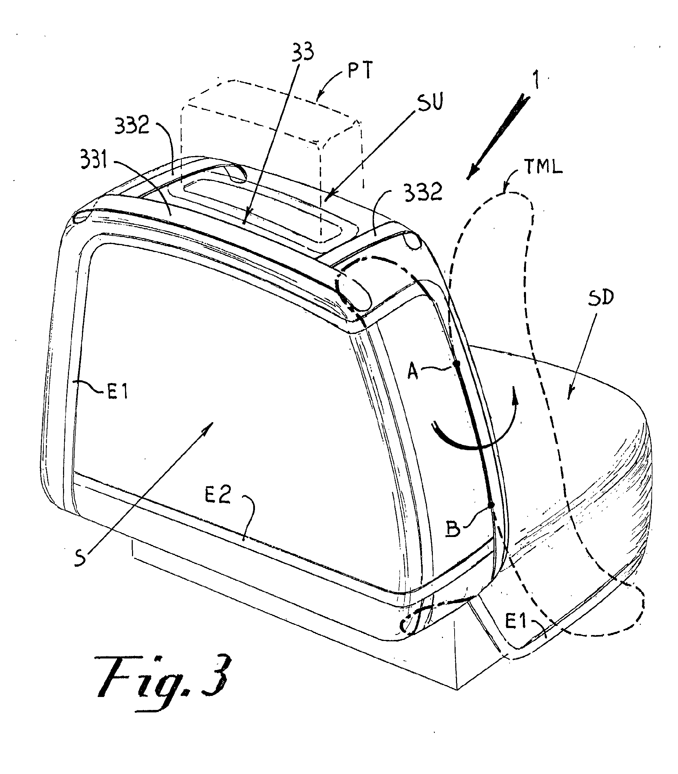

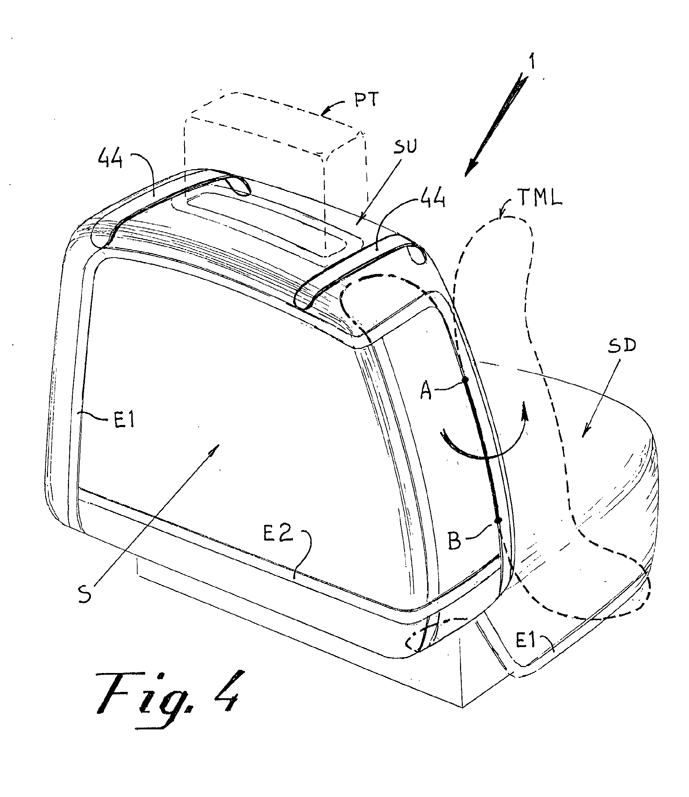

## Claims

1. Elemente for positioning and fixing of covering "seat cover" of vehicle's seats, this element resulting applicable to generally seats, particularly at single-seates seats moreover specially of type with side air-bag and having the most function to distribute remarkably in a regular and uniform way the covering fabric particularly in critical parts of back (S) which essentially resulting in uppon part of this last allowing in this way to use an only one element of "seat cover" to cover seats which present above all backs (S) with conformations and dimensions also discretely different, this fixing and positioning element (11-22-33-44) being market out by boint to be essentially made of almost a crop of suitable and easily fold material and so able to be conform through simply manual action which (11-22-33-44) resulting fixed in a correspondent part or a critical zone of "seat cover", moreover in preference into this last, following to suitable deformative intervent developed by user, it adjust itself to the form of interested zone making regularly and uniformly stick covering fabric.

2. Element according with claim number 1 marked by point that crop or crops used to make these fixing and positioning elements (11-22-33-44) made of easily fold material are deduced from a suitable metal strap of mild alluminium or equivalent material.

3. Element according with previous claims **characterized** of point to be made of an only one longitudinal element (11-22) placed in uppon part (SU) of back (S) of relative seat (1) and extending longitudinally along the same, preferibly positioned near relative rear bord or along rear part of this back (S) always near rear bord of the same.

4. Element according with previous claims **characterized** of point that instead to be made of one element (11-22) placed near rear bord of uppon line (SU) of back (S) of seat (1), it can result made of a couple of crops fold at form of "U" forming relative flasks (44) applicated out of danger of this uppon line (SU) of back (S) symmetrically lateral , the two flasks (44) of this other possible solution can be moreover applicated at only one longitudinal element (331) placed longitudinally in the rear part of this uppon line (SU) of back (S) in order to reach a wider use possibility.
